# EUROPÄISCHE PATENTSCHRIFT

(11) **EP 1 342 926 B1**
(45) Veröffentlichungstag und Bekanntmachung des Hinweises auf die Patenterteilung: **26.08.2009**
(21) Anmeldenummer: 02004900.3
(22) Anmeldetag: 04.03.2002
(51) Int. Cl.: F16B 2/18

(54) **Befestigungsvorrichtung**
Fastening Device
Dispositif de fixation

(43) Veröffentlichungstag der Anmeldung: 10.09.2003
(73) Patentinhaber: Houben, Dietmar, 42320 Wuppertal (DE)
(72) Erfinder: Houben, Dietmar, 42320 Wuppertal (DE)
(74) Vertreter: Selting, Günther

(56) Entgegenhaltungen:
- DE-A- 2 949 436
- DE-A- 3 339 686
- DE-U- 1 867 188
- GB-A- 2 245 019
- US-A- 4 572 694

## Beschreibung

Die Erfindung bezieht sich auf eine Befestigungsvorrichtung mit einem Rahmenteil und einem daran montierten Montageteil.

Derartige Befestigungsvorrichtungen dienen beispielsweise der Befestigung von Fassadenelementen an einem Gebäude, als Haltevorrichtung bei Möbeln zur Befestigung von Möbel-Bauteilen miteinander, als Haltevorrichtung zur Befestigung von Modulen in einem Schaltschrank etc. Bekannte Befestigungsvorrichtungen weisen, beispielsweise als Fassaden-Haltevorrichtung ausgebildet, ein gebäudeseitiges bzw. feststehendes Rahmenteil auf, an das ein das Fassadenelement haltendes Montageteil befestigt wird. Bei einer aus DE-A-29 49 436 bekannten Befestigungsvorrichtung weist das feststehende Rahmenteil eine oder mehrere Hinterschneidungen auf, in die jeweils ein entsprechender Eingreifteil des Montageteiles eingreift. Zur Fixierung des Montageteiles an dem Rahmenteil dient ein Spannelement, element, das als drehbarer Exzenter mit maximal zwei Nocken ausgebildet ist. Das Spannelement wird durch die Reibung zwischen dem Spannelement und den zwei Klemmflächen des Montageteiles und des Rahmenteils in seiner Fixierposition gehalten.

In DE 1 867 188 U ist eine Klemmvorrichtung für teleskopartig verschiebbare Rohre beschrieben, die durch Drehung des Innenrohres um dessen Längsachse betätigt wird. Das Innenrohr weist drei nach außen gerichtete Vorsprünge in Form von Nocken auf. Das Außenrohr enthält eine geschlitzte Klemmbüchse, die an ihrem Innenumfang der Zahl der radialen Vorsprünge entsprechende Abschnitte mit in Umfangsrichtung gleichgerichtet zunehmenden Wandstärken aufweist. Durch Drehung des Innenrohres relativ zum Außenrohr wird das Innenrohr im Außenrohr festgeklemmt.

Aufgabe der Erfindung ist es, eine Befestigungsvorrichtung mit verbesserter Fixierung des Spannelementes zu schaffen.

Diese Aufgabe wird erfindungsgemäß mit den Merkmalen des Anspruchs 1 gelöst.

Bei der erfindungsgemäßen Befestigungsvorrichtung weisen das Montageteil und das Rahmenteil zusammen drei einander zugewandte Klemmflächen auf, die einen Spannkanal bilden. Das Rahmenteil und das Montageteil weisen jeweils mindestens eine Klemmfläche auf, wobei zwei Klemmflächen auf das Rahmenteil und eine auf das Montageteil verteilt sind.

Die drei Klemmflächen sind derart einander zugeordnet, dass sie zusammen zwischen sich den annähernd geschlossenen Spannkanal bilden und seitlich begrenzen.

In den Spannkanal ist das zwischen einer Montageposition und einer Fixierposition drehbare Spannelement eingesetzt. Das Spannelement weist drei Nocken auf, die in der Fixierposition des Spannelementes zwischen den drei zugeordneten Klemmflächen verklemmt sind. In der Fixierposition des Spannelementes drücken die drei Nocken ungefähr senkrecht gegen die jeweils zugeordnete Klemmfläche. Hierdurch werden das Montageteil und das Rahmenteil im Bereich des Spannkanales auseinander gedrückt, wodurch das Rahmenteil mit dem Montageteil fest verspannt wird. Das Spannelement sperrt die Teile gegen ein Lösen des Eingreifteiles des Rahmenteiles aus der Hinterschneidung des Montageteiles. Durch die Reibung zwischen den Klemmflächen und den Spannelement-Nocken und zwischen dem Eingreifteil und der Hinterschneidung wird das Rahmenteil gegen ein Verschieben an dem Montageteil fixiert.

Die Hinterschneidung in dem Montageteil kann beispielsweise als hinterschnittener Schlitz ausgebildet sein, in den ein hakenförmiger Eingreifteil eingesteckt ist und mit seinem Haken das geschlitzte Teil im Bereich seiner Hinterschneidung hintergreift. Das Montageteil kann an dem Rahmenteil verschiebbar sein, solange das Spannelement nicht in der Fixierposition steht.

Die Hinterschneidungen können auch an dem Rahmenteil und die korrespondierenden Eingreifteile an dem Montageteil vorgesehen sein.

Durch Vorsehen von drei Spannelement-Nocken und drei korrespondierenden Klemmflächen des Rahmenteiles und des Montageteiles wird eine Auflage des Spannelementes an drei Punkten oder ggf. drei Linien realisiert. Durch die Drei-Punkt-Fixierung ist das Spannelement abgestützt gegen Verkippen. Dadurch ist das Spannelement auch bei Erschütterungen, wärmebedingten Verschiebungen zwischen Montageteil und Rahmenteil und anderen Bewegungen zuverlässig gegen Verkippen abgestützt, so dass ein unverwünschtes Drehen des Spannelementes und damit ein unerwünschtes Lösen der Fixierung des Montageteiles an dem Rahmenteil praktisch ausgeschlossen sind. Es können auch mehr als jeweils drei Klemmflächen und Nocken vorgesehen sein, beispielsweise vier oder fünf Klemmflächen und Nocken.

Gemäß einer bevorzugten Ausgestaltung ist der Außendurchmesser des Nockenkreises größer als der Durchmesser des durch die Klemmflächen gebildeten Innenkreises des Spannkanales. Hierdurch wird sichergestellt, dass die Nocken in einer bestimmten Drehposition, der Fixierposition, des Spannelementes die Klemmflächen mit großer Kraft auseinanderdrücken.

Vorzugsweise ist die Querschnittsform des Spannelementes ähnlich und kleiner zu der Querschnittsform des Spannkanales, so dass das Spannelement in der Montageposition mit einem umlaufenden Spalt in dem Spannkanal sitzt. Der Spalt zwischen den Klemmflächen des Spannkanales und dem Spannelement weist annähernd eine konstante Breite oder eine Mindestbreite von mindestens 0,5 mm auf. Dadurch wird ein einfaches Einstecken des Spannelementes in den Spannkanal sichergestellt.

Gemäß einer bevorzugten Ausgestaltung weist das Rahmenteil zwei Klemmflächen und das Montageteil eine Klemmfläche auf. Diese Konstellation hat sich bezüglich ihrer Stabilität bewährt.

Vorzugsweise weist das Montageteil zwei Hinterschneidungen und das Rahmenteil zwei entsprechende korrespondierende Eingreifteile auf. Die Hinterschneidung kann länger ausgebildet sein als die Eingreifteile, so dass das Montageteil an dem Rahmenteil verschiebbar ist, solange das Montageteil nicht durch das Spannelement an dem Rahmenteil fixiert ist. Die Hinterschneidungen können jedoch auch die gleiche Länge wie die entsprechenden korrespondierenden Eingreifteile aufweisen, so dass ein Verschieben des Montageteiles an dem Rahmenteil nicht möglich ist.

Gemäß einer bevorzugten Ausgestaltung weist das Rahmenteil zwei zueinander spreizbare Arme auf, die jeweils eine Klemmfläche und einen Eingreifteil aufweisen. Die beiden Arme sind zueinander spreizbar, beispielsweise durch Vorsehen eines Gelenkes zwischen den beiden Armen. Durch die Beweglichkeit der beiden Arme zueinander kann insbesondere die Montierbarkeit des Montageteiles an dem Rahmenteil erleichtert werden. Bei Ausbildung der montageteilseitigen Hinterschneidungen als T-förmiger Schlitz kann das Einsetzen des Montageteiles in das Rahmenteil nicht nur von den Längsseiten des Schlitzes aus, sondern auch direkt durch die Schlitzöffnung hindurch erfolgen. Hierzu werden die beiden Arme soweit zusammengeführt, dass die beiden Eingreifteile durch die Schlitzöffnung hindurch gesteckt werden können. Nach dem Hindurchstecken werden die Arme wieder gespreizt, so dass ihre Eingreifteile in die zugeordneten Hinterschneidungen eingreifen. Da jeder Arm eine Klemmfläche aufweist, werden die beiden Arme in der Fixierposition des Spannelementes von den zugeordneten zwei Nocken zwangsweise auseinandergedrückt, so dass die Eingreifteile der beiden Arme nicht aus den Hinterschneidungen herausfallen können. Mit dem Vorsehen von zwei spreizbaren Armen wird die Montage des Montageteiles an dem Rahmenteil erheblich vereinfacht.

Vorzugsweise ist an dem Rahmenteil mindestens ein Nockenhalteelement zum Halten des Spannelementes in seiner Montageposition angeordnet. Das Nockenhalteelement ragt derart in den Spannkanal hinein, dass das eingesteckte Spannelement so fest gehalten wird, dass es axial nicht aus dem Spannkanal herausfallen kann. Es können auch mehrere Nockenhalteelemente vorgesehen sein. Das Nockenhalteelement kann auch als leicht verformbare Füllung des Spaltes zwischen dem Spannelement und den Klemmflächen ausgebildet sein.

Gemäß einer bevorzugten Ausgestaltung sind der Spannkanal und das Spannelement im Querschnitt annähernd gleichseitig dreieckig ausgebildet, wobei die drei Ecken des Spannelementes die Nocken bilden. Das Spannelement kann mit konvexen Seiten und der Spannkanal mit entsprechenden konkaven Klemmflächen ausgebildet sein.

Vorzugsweise sind die Nocken als in Umfangsrichtung verlaufende Nockenrippen ausgebildet, die in der Fixierposition des Spannelementes in die jeweiligen Klemmflächen einschneiden. Die Nockenrippen haben keine oder eine relativ geringe Steigung. Durch Vorsehen von als Querrippen oder -schneiden ausgebildeten Nockenrippen wird einerseits ein relativ leichtes Verdrehen des Spannelementes in seine Fixierposition ermöglicht. Andererseits wird durch das Einschneiden der Nockenrippen bzw. -schneiden in die Klemmflächen auch eine hohe Haltekraft des Spannelementes in seiner Fixierposition sichergestellt. Ferner wird eine starke Verformung des Montageteiles und des Rahmenteiles vermieden. Die Einschneidtiefe kann bei Metall-Teilen ungefähr 0,7 mm betragen und kann bei Holz-Teilen ungefähr 1,2 mm betragen.

Gemäß einer bevorzugten Ausgestaltung weist das Spannelement einen Spannelementkopf auf, der eine Struktur zum Ansetzen eines Drehwerkzeuges aufweist. Alternativ oder ergänzend kann das Spannelement auch einen Drehhebel. zum werkzeuglosen Drehen des Spannelementes aufweisen.

Vorzugsweise weist das Spannelement einen Kopf auf, der einen Anschlag zur Begrenzung des Drehwinkels des Spannelementes aufweist. Hierdurch wird ein Überdrehen des Spannelementes über die Fixierposition hinaus zuverlässig vermieden und dadurch eine sichere und zuverlässige Montage gewährleistet.

Im folgenden werden unter Bezugnahme auf die Zeichnungen mehrere Ausführungsbeispiele näher erläutert.

Es zeigen:
- Fig. 1: eine Befestigungsvorrichtung mit einem Spannelement in der Montageposition,
- Fig. 2: die Befestigungsvorrichtung der Figur 1 mit dem Spannelement in der Fixierposition,
- Fig. 3: das Spannelement der Befestigungsvorrichtung der Figuren 1 und 2 in perspektivischer Ansicht,
- Fig. 4: ein zweites Ausführungsbeispiel eines Spannelementes mit einem Kopf zum Ansetzen eines Spezialwerkzeuges,
- Fig. 5: ein drittes Ausführungsbeispiel eines Spannelementes mit einem Drehhebel,
- Fig. 6: einen Querschnitt des Spannelementes der Fig. 1 und 2 mit Nockenrippen in Querrichtung,
- Fig. 7: ein weiteres Ausführungsbeispiel eines Spannelementes mit verbreiterten Nockenrippen,
- Fig. 8: ein weiteres Ausführungsbeispiel eines Spannelementes mit umlaufenden Nockenrippen,
- Fig. 9: ein zweites Ausführungsbeispiel einer Befestigungsvorrichtung mit zwei V-förmig zueinander angeordneten Rahmenteil-Armen,
- Fig. 10: ein drittes Ausführungsbeispiel einer Befestigungsvorrichtung mit einem unsymmetrischen Rahmenteil-Profil und einem symmetrischen Montageteil-Profil,
- Fig. 11: ein viertes Ausführungsbeispiel einer Befestigungsvorrichtung mit einem Rahmenteil mit zwei zueinander gelenkigen spreizbaren Armen,
- Fig. 12: ein fünftes Ausführungsbeispiel einer Befestigungsvorrichtung mit einem symmetrischen Montageteil-Profil und einem unsymmetrischen Rahmenteil-Profil,
- Fig. 13: ein sechstes Ausführungsbeispiel einer Befestigungsvorrichtung mit einem unsymmetrischen Rahmenteil-Profil und einem symmetrischen Montageteil-Profil, und
- Fig. 14: ein siebtes Ausführungsbeispiel einer Befestigungsvorrichtung mit einem symmetrischen Montageteil-Profil und einem unsymmetrischen Rahmenteil-Profil.

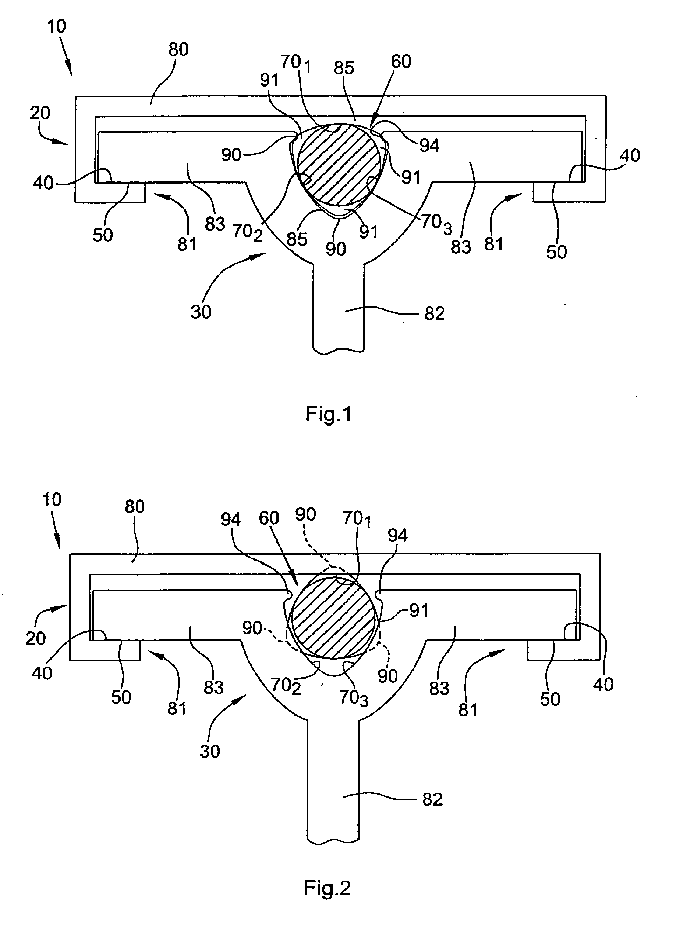

In den Figuren 1 und 2 ist eine erste Ausführungsform einer Befestigungsvorrichtung 10 zur Befestigung von Fassadenelementen an einem Gebäude dargestellt. Die Befestigungsvorrichtung 10 kann aber auch in anderen Bereichen Verwendung finden, beispielsweise bei der Möbelherstellung zum Verbinden zweier Möbelbauteile, in Schaltschränken zur Befestigung von Modulen an dem Schaltschrankrahmen, etc. Die Befestigungsvorrichtung kann in allen Bereichen verwendet werden, in denen eine feste und sichere Verbindung zwischen zwei entsprechend ineinandergreifenden Bauteilen hergestellt werden soll.

Die Befestigungsvorrichtung 10 besteht im Wesentlichen aus einem feststehenden bzw. gebäudeseitigen Rahmenteil 30, in das ein Montageteil 20 eingesetzt ist, das mit Hilfe eines Spannelementes 60 an dem Rahmenteil 30 fixiert werden kann, wie in Figur 2 dargestellt. Dies gilt ebenso für alle übrigen Ausführungsbeispiele der Befestigungsvorrichtung. Das Rahmenteil 30 ist im vorliegenden Beispiel an einem Gebäude befestigt, und das Montageteil 20 hält ein Fassadenelement zur Verblendung des Gebäudes.

Das Montageteil 20 der ersten Ausführungsform der Befestigungsvorrichtung 10 besteht aus einem langgestreckten Profilkörper 80, der einen rechteckigen kastenförmigen Querschnitt aufweist. An der dem Gebäude zugewandten Rückseite des Montageteiles 20 weist der Profilkörper 80 einen langgestreckten Öffnungsschlitz 81 auf. Zu beiden Seiten des Öffnungsschlitzes 81 ist jeweils eine Hinterschneidung 40 gebildet. Die Hinterschneidungen 40 und der Öffnungsschlitz 81 bilden einen T-förmigen Raum. An der glatten Vorderseite des Montageteiles 20 ist ein nicht dargestelltes Fassadenelement zur Verblendung der betreffenden Gebäudefassade befestigt.

Das Rahmenteil 30 wird im Wesentlichen gebildet von einem gebäudeseitigen Tragarm 82, an dessen montageteilseitigem Ende zwei ungefähr rechtwinklig zwei zur Seite abstehende Haltearme 83 vorgesehen sind. Das dem Montageteil 20 abgewandte Ende des Tragarmes 82 ist an dem nicht dargestellten Gebäude befestigt, beispielsweise eingegossen oder verschraubt. Die beiden äußeren Enden der Haltearme 83 bilden jeweils einen Eingreifteil 50. Die Eingreifteile 50 hintergreifen die beiden Hinterschneidungen 40, so dass Montageteil 20 nur an einem seiner beiden offenen Profil-Längsenden aus den Eingreifteilen 50 des Rahmenteiles 30 herausgeführt werden kann.

Der Kreuzungsbereich des Tragarmes 82 und der beiden Haltearme 83 wird von zwei konkaven Klemmflächen 70₂, 70₃ gebildet, die in einem mittleren Winkel von annähernd 60 Grad zueinander stehen.

Eine dritte Klemmfläche 70₁ wird von der den beiden Rahmenteil-Klemmflachen 70₂, 70₃ gegenüberliegenden Grundwand des Montageteil-Profilkörpers 80 gebildet. Alle drei Klemmflächen 70₁-70₃ stehen in ungefähr 60 Grad zueinander und bilden einen annähernd dreieckigen Spannkanal 85.

In den Spannkanal 85 ist das stiftförmige Spannelement 60 eingesteckt. Die Querschnittsform des Spannelementes 60 ist ähnlich dreieckig ausgebildet wie die Querschnittsform des Spannkanales 85. Die drei Eckenbereiche des im Querschnitt dreieckigen Spannelementes 60 bilden drei Nocken 90. Die Nocken 90 sind als schneidenartige Nockenrippen 91 ausgebildet, die in der in Figur 2 dargestellten Fixierposition des Spannelementes 60 ungefähr 0,7 mm tief in die jeweilige zugeordnete Klemmfläche 70₁-70₃ eindringen.

Die Montageposition des Spannelementes 60 ist in Figur 1 dargestellt. In dieser Position des Spannelementes 60 ist zwischen der Einhüllenden des Spannelementes 60 und den drei Klemmflächen 70₁-70₃ ein umlaufender Spalt gebildet. Durch Drehen des Spannelementes 60 aus seiner Montageposition in die in Figur 2 dargestellte Fixierposition werden die drei Nocken 90 zwischen den drei Klemmflächen 70₁-70₃ verspannt. Der Außendurchmesser des Nockenkreises, d.h. die kreisförmige Einhüllende der drei Nocken 90 ist größer als der Durchmesser des durch die Klemmflächen 70₁-70₃ eingeschlossenen Innenkreises des Spannkanales 85.

Im Randbereich der rahmenteilseitigen Klemmflächen 70₁-70₂ ist jeweils als Nockenhalteelement 94 eine Nockenhaltenase vorgesehen, durch die das Spannelement 60 in seiner in Figur 1 dargestellten Montageposition gegen axiales Verschieben festgehalten wird. Die Nockenhalteelemente 94 können als einzelne Noppen oder aber als durchgehende Leiste ausgebildet sein.

Sowohl das Montageteil 20 als auch das Rahmenteil 30 und das Spannelement 60 sind aus Metall gefertigt. Sowohl das Montageteil 20 als auch das Rahmenteil 30 können als Strangpressprofile hergestellt sein. Die Teile können jedoch auch teilweise oder komplett aus Holz oder Kunststoff gefertigt sein.

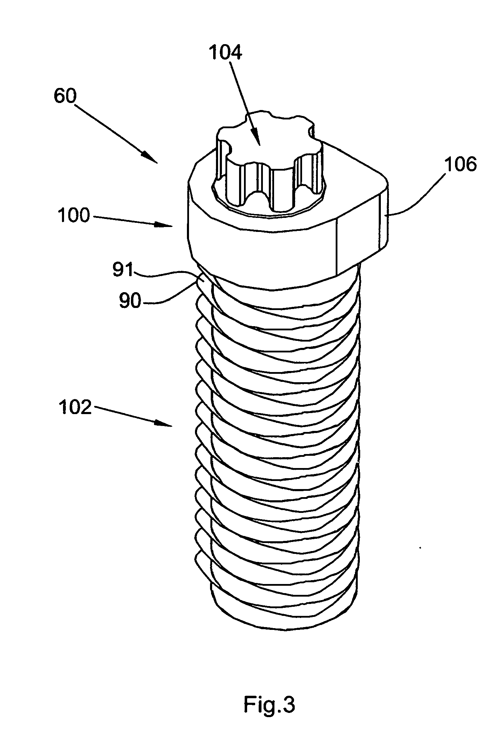

In den Figuren 3-5 sind verschiedene Ausbildungen des Spannelementes dargestellt.

Das in Figur 3 dargestellte Spannelement 60 weist einen Kopf 100 auf, an den sich der Spannkörper 102 einstückig anschließt. Der Spannelement-Kopf 100 weist eine Struktur zum Ansetzen eines Drehwerkzeuges auf. Diese Struktur wird von einem Torx-Ansatz 104 gebildet, so dass das Spannelement 60 mit einem entsprechenden Torx-Drehwerkzeug aus seiner Montageposition in seine Fixierposition gedreht werden kann. Ferner weist der Spannelement-Kopf 100 einen nockenförmigen Anschlag 106 zur Begrenzung des Drehwinkels des Spannelementes 60 auf. Beim Drehen des Spannelementes 60 aus der Montageposition in die Fixierposition schlägt der Anschlag 106 schließlich an ein feststehendes Teil des Montageteiles 20 an. Hierdurch wird ein Überdrehen des Spannelementes 60 über seine Fixierposition hinaus verhindert.

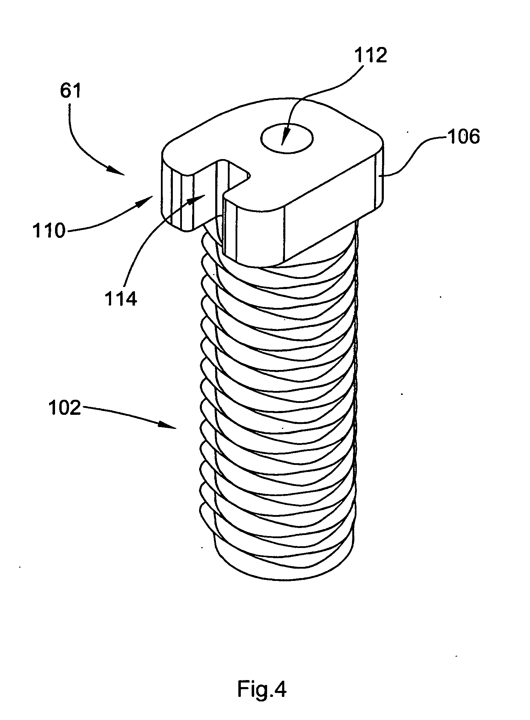

In Figur 4 ist eine zweite Ausführungsform eines Spannelementes 61 dargestellt. Der Kopf 110 weist eine axiale mittige Bohrung 112 und eine schlitzförmige Struktur 114 auf. Mit einem entsprechenden speziellen Drehwerkzeug, das sowohl in die Bohrung 112 als auch in die schlitzförmige Struktur 114 eingreift, kann das Spannelement 61 aus seiner Montageposition in seine Fixierposition gedreht werden. Ohne das spezielle Drehwerkzeug kann das Spannelement nicht gedreht werden, so dass ein unbefugtes Verdrehen des Spannelementes erschwert ist.

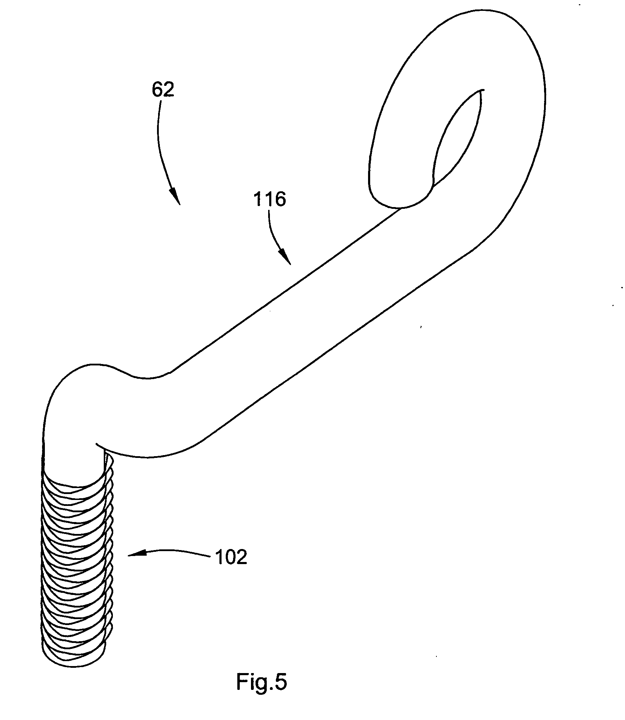

In Figur 5 ist eine weitere Ausführungsform eines Spannelementes 62 dargestellt. Das Spannelement 62 weist an einem Ende des Spannkörpers 102 einen Drehhebel 116 zum werkzeuglosen Verdrehen des Spannelementes 62 mit der Hand auf.

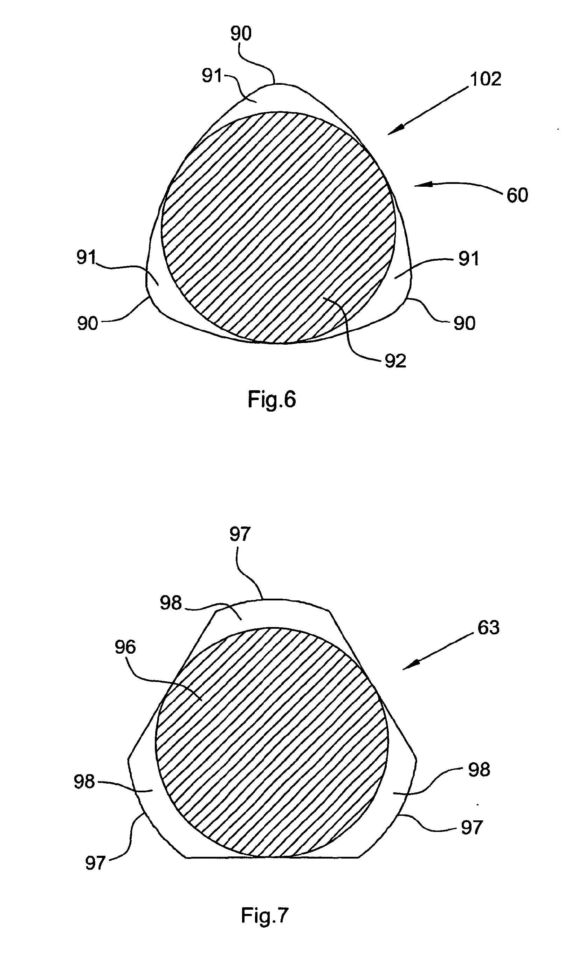

In den Figuren 6-8 sind verschiedene Ausführungsformen von Spannelementen dargestellt, die sich in der Form ihres Querschnittes voneinander unterscheiden.

Bei dem in Figur 6 dargestellten Spannelement 60 weist der Spannkörper 102 einen kreisförmigen Kern 92 auf, von dem sich die Nocken 90 bildenden sichelförmigen Nockenrippen 91 in Querrichtung nach außen erstrecken. Die Nocken 90 stehen genau in einem Winkel von 120 Grad zueinander. Es sind jeweils mehrere Nockenrippen 91 übereinander angeordnet.

Bei dem in Figur 7 dargestellten Spannelement 63 ist der Kern 96 im Querschnitt ebenfalls kreisförmig ausgebildet. Die die Nocken 97 bildenden Nockenrippen 98 sind an ihrer Außenseite ebenfalls kreisförmig ausgebildet. Die Seitenkanten der Nockenrippen 98 zwischen zwei Nocken 97 sind jeweils gradlinig ausgeführt.

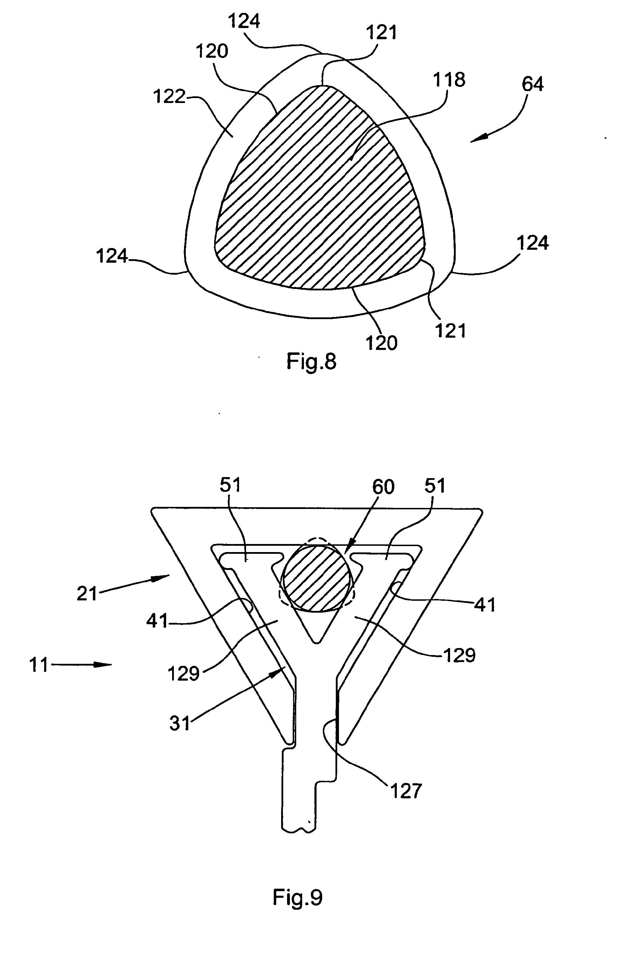

Das in Figur 8 dargestellte Ausführungsbeispiel eines Spannelementes 64 weist einen im Querschnitt dreieckigen Kern 118 mit konvexen Kernwänden 120 und drei abgerundeten Ecken 121 auf. Der Kern 118 wird von mehreren übereinander angeordneten Nockenrippen 122 umgeben. Jede Nockenrippe 122 weist über ihren gesamten Umfang eine konstante radiale Breite auf, so dass sie die Kontur der Kernwände 120 mit konstanter Breite umhüllt. Die Eckbereiche der Nockenrippen 122 bilden die Nocken 124.

Jedes Spannelement weist mehrere Nockenrippen übereinander auf.

In den Figuren 9-14 sind weitere Ausführungsbeispiele von Fassaden-Halteelementen dargestellt.

Bei der in Figur 9 dargestellten Befestigungsvorrichtung 11 ist das Montageteil 21 als dreieckiges Hohlprofil ausgebildet; wobei ein Öffnungsschlitz 127 in einem Eckbereich des dreieckigen Montageteils 21 vorgesehen ist. Das gebäudeseitige Rahmenteil 31 weist an seinem montageteilseitigen Ende zwei Arme 129 auf, die V-förmig unter einem Winkel von ungefähr 60 Grad auseinanderlaufen. Die Enden der beiden Arme 129 bilden die Eingreifteile 51, die in die Hinterschneidungen 41 bildenden rahmenteilseitigen Wände des Montageteils 21 eingreifen bzw. diese hintergreifen.

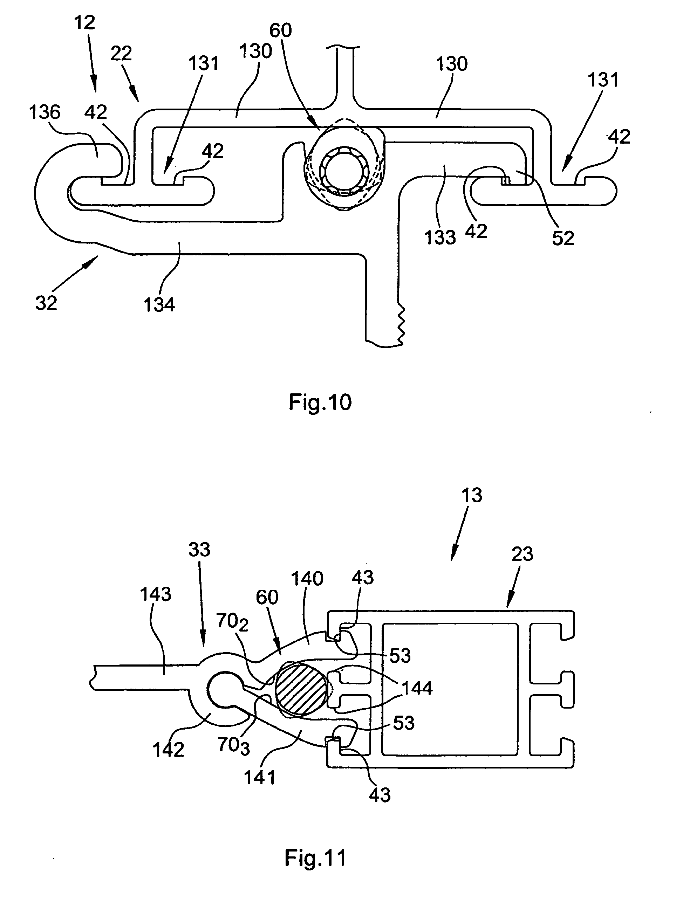

Bei dem in Figur 10 dargestellten Ausführungsbeispiel einer Befestigungsvorrichtung 12 weist das Montageteil 22 zu jeder Seite einen Haltearm 130 auf, an den sich ein T-förmiges Endstück 131 anschließt. Die beiden Seitenarme der T-förmigen Endstücke 131 bilden jeweils zwei Hinterschneidungen 42.

Das Rahmenteil 32 ist unsymmetrisch aufgebaut und weist einen ersten Haltearm 133 und gegenüberliegend einen zweiten Haltearm 134 auf. Das freie Ende des ersten Haltearmes 133 bildet einen ersten Eingreifteil 52. Der zweite Haltearm 134 weist als Eingreifteil 136 einen U-förmigen Abschluss des Haltearmes 134 auf. Das Montageteil 22 kann sowohl von links als auch von rechts in das Rahmenteil 32 eingesetzt werden. Ferner ist es möglich, das Montageteil 22 von der Fassadenseite aus in das Rahmenteil 32 einzusetzen.

In dem in Figur 11 dargestellten Ausführungsbeispiel einer Befestigungsvorrichtung 13 weist das Rahmenteil 33 zwei zueinander schwenkbare bzw. spreizbare Arme auf, von denen jeder einen Eingreifteil 53 zum Eingriff in die betreffende Hinterschneidung 43 des Montageteiles 23 aufweist. Während der eine Arm 140 steif und einstückig mit dem übrigen Rahmenteil-Grundkörper 143 verbunden ist, ist der zweite Arm 141 mit einem Gelenk 142 gelenkig an dem Rahmenteil-Grundkörper 143 angebracht.

Die beiden Arme 140,141 sind durch eine Blattfeder nach außen vorgespannt. Durch die zueinander spreizbar ausgebildeten Arme 140,141 des Rahmenteils 33 ist ein Einstecken des Rahmenteils 33 in die betreffenden Längsschlitze 144 des Montageteiles 23 in Querrichtung möglich. Hierdurch wird die Montage des Montageteiles 23 an dem Rahmenteil 33 erheblich vereinfacht. Durch das Spannelement 60 werden die beiden Arme 140,141 zwangsweise so weit auseinander gerückt, dass die Eingreifteile 53 nicht aus den Hinterschneidungen 43 herausrutschen oder herausfallen können.

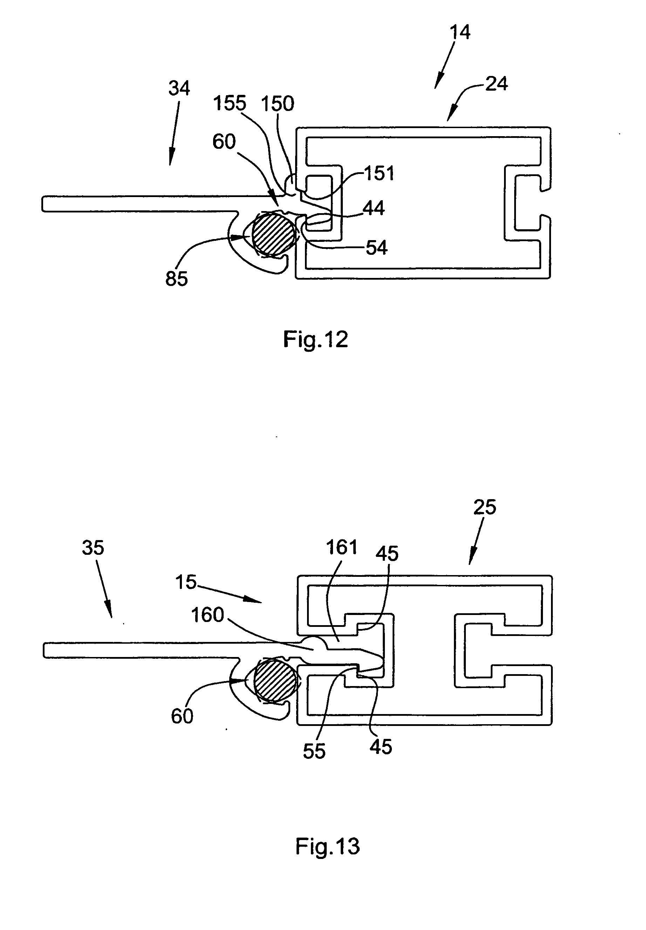

In dem in Figur 12 dargestellten Ausführungsbeispiel einer Befestigungsvorrichtung 14 weist das Rahmenteil 34 einen einzigen Eingreifteil 54 auf, der in eine von zwei Hinterschneidungen 44 des Montageteils 24 eingreift. Ferner weist das Rahmenteil 34 einen Stützteil 150 auf, der auf der Außenseite des Montageteils 24 aufliegt. Das Gegenstück zu dem Stützteil 150 bildet das Spannelement 60 auf der anderen Seite des Einsteckschlitzes 151. Im Bereich des Schlitzes 151 weist das Rahmenteil 34 einen Absatz 155 auf, durch den das Rahmenteil 34 in diesem Bereich ungefähr die Breite des Schlitzes 151 einnimmt und annähernd spielfrei darin sitzt. Das in den Spannkanal 85 eingesteckte und verspannte Spannelement 60 verriegelt das Rahmenteil 34 und das Montageteil 24 gegen ein Herausschwenken des Eingreifteiles 54 aus der Hinterschneidung 44.

In Figur 13 ist eine Befestigungsvorrichtung 15 dargestellt, bei der das Rahmenteil 35 einen einzigen Eingreifteil 55 aufweist, der in eine entsprechende Hinterschneidung 45 des Montageteils 25 eingreift. Das Rahmenteil 35 weist eine abgerundete Verdickung 160 auf, die im Bereich des Einsteckschlitzes 161 ungefähr die gleiche Breite wie die des Einsteckschlitzes 161 aufweist. Durch die Verdickung 160 ist das Rahmenteil in dem Einsteckschlitz 161 zwar drehbar, nicht jedoch in Richtung der Schlitzbreite beweglich. Das Rahmenteil 35 ist daher in diesem Bereich ein Hebelarm, der sich um die Verdickung 160 dreht. Das eine Ende des Hebelarmes wird von dem Eingreifteil 55 gebildet. Das andere Ende des Hebels wird durch das Spannelement 60 abgestützt.

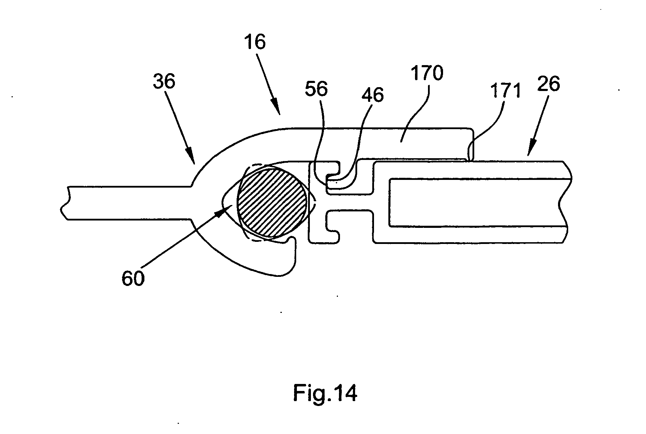

In dem in Figur 14 dargestellten Ausführungsbeispiel einer Befestigungsvorrichtung 16 greift das Rahmenteil 36 außenseitig an das Montageteil 26 an. Ein hakenförmiger Eingreifteil 56 hintergreift die hakenförmige Hinterschneidung 46. Der an drei Punkten abgestützte Hebelarm 170 des Rahmenteils 36 weist einen Abstützteil 171 auf, durch den der Hebelarm 170 an seinem einen Ende abgestützt wird. Das andere Ende des Hebelarmes 170 wird durch das Spannelement 60 abgestützt, so dass das Montageteil 26 zuverlässig an dem Rahmenteil 36 befestigt ist.

## Patentansprüche

1. Befestigungsvorrichtung mit einem Rahmenteil (30) und einem an dem Rahmenteil (30) montierten Montageteil (20), wobei
das Montageteil (20) eine Hinterschneidung (40) aufweist,
das Rahmenteil (30) einen Eingreifteil (50) aufweist, der in die Hinterschneidung (40) eingreift, und
ein Spannelement (60) zum Verspannen des Rahmenteiles (30) mit dem Montageteil (20) vorgesehen ist,
**dadurch gekennzeichnet,**
**dass** das Montageteil (20) und das Rahmenteil (30) insgesamt drei einander zugewandte Klemmflächen (70₁, 70₂, 70₃) aufweisen, die einen Spannkanal (85) bilden, so dass zwei Klemmflächen auf das Rahmenteil und eine auf das Montageteil verteilt sind, und
**dass** das in dem Spannkanal (85) zwischen einer Montageposition und einer Fixierposition drehbare Spannelement (60) drei Nocken (90) aufweist, die in der Fixierposition des Spannelementes (60) zwischen den drei zugeordneten Klemmflächen (70₁, 70₂, 70₃) verklemmt sind.

2. Befestigungsvorrichtung nach Anspruch 1, **dadurch gekennzeichnet, dass** der Außendurchmesser des Nockenkreises größer als der Durchmesser des durch die Klemmflächen (70₁, 70₂, 70₃) gebildeten Innenkreises des Spannkanales (85) ist.

3. Befestigungsvorrichtung nach Anspruch 1 oder 2, **dadurch gekennzeichnet, dass** die Querschnittsform des Spannelementes (60) ähnlich und kleiner zu der Querschnittsform des Spannkanales (85) ist, so dass zwischen dem Spannelement (60) in der Montageposition und dem Spannkanal (85) ein Spalt gebildet ist.

4. Befestigungsvorrichtung nach einem der Ansprüche 1 - 3,
**dadurch gekennzeichnet, dass** das Montageteil (20) zwei Hinterschneidungen (40) und das Rahmenteil (30) zwei zugeordnete Eingreifteile (50) aufweist.

5. Befestigungsvorrichtung nach einem der Ansprüche 1 - 4,
**dadurch gekennzeichnet, dass** das Rahmenteil (33) zwei zueinander spreizbare Arme (140,141) aufweist, die jeweils eine Klemmfläche (70₂,70₃) und einen Eingreifteil (53) aufweisen.

6. Befestigungsvorrichtung nach einem der Ansprüche 1 - 5,
**dadurch gekennzeichnet, dass** an dem Rahmenteil (30) mindestens ein Nockenhalteelement (94) zum Halten des Spannelementes (60) in seiner Montageposition angeordnet ist.

7. Befestigungsvorrichtung nach einem der Ansprüche 1 - 6,
**dadurch gekennzeichnet, dass** der Spannkanal (85) und das Spannelement (60) im Querschnitt annähernd gleichseitig dreieckig ausgebildet sind, wobei die drei Ecken des Spannelementes (60) die Nocken (90) bilden.

8. Befestigungsvorrichtung nach Anspruch 7, **dadurch gekennzeichnet, dass** das Spannelement (60) konvexe Seiten und der Spannkanal (85) entsprechende konkave Klemmflächen (70₁-70₃) aufweist.

9. Befestigungsvorrichtung nach einem der Ansprüche 1 - 8,
**dadurch gekennzeichnet, dass** die Nocken (90) als in Umfangsrichtung verlaufende Nockenrippen (91) ausgebildet sind, die in der Fixierposition in die jeweiligen Klemmflächen (70₁-70₃) einschneiden.

10. Befestigungsvorrichtung nach einem der Ansprüche 1 - 9,
**dadurch gekennzeichnet, dass** das Spannelement (60) einen Kopf (100) aufweist, der eine Struktur (104) zum Ansetzen eines Drehwerkzeuges aufweist.

11. Befestigungsvorrichtung nach einem der Ansprüche 1 - 10,
**dadurch gekennzeichnet, dass** das Spannelement (60) einen Drehhebel (116) zum werkzeuglosen Drehen des Spannelementes (62) aufweist.

12. Befestigungsvorrichtung nach einem der Ansprüche 1 - 11,
**dadurch gekennzeichnet, dass** das Spannelement (60) einen Kopf (100) aufweist, der einen Anschlag (106) zur Begrenzung des Drehwinkels des Spannelementes (60) aufweist.

## Claims

1. Fastening device comprising a frame member (30) and a mounting member (20) mounted to the frame member (30), wherein
the mounting member (20) comprises an undercut (40),
the frame member (30) comprises an engagement part (50) engaging into the undercut (40), and
a tensioning element (60) for tightening the frame member (30) to the mounting member (20),
**characterized in**
**that** the mounting member (20) and the frame member (30) comprise a total of three clamping faces (70₁, 70₂, 70₃) facing each other and forming a tensioning channel (85) such that two clamping faces are provided on the frame member and one is provided on the mounting member, and
**that** the tensioning element (60), rotatable in the tensioning channel (85) between a mounting position and a fixing position, has three cams (90) clamped between the three associated clamping faces (70₁, 70₂, 70₃) when the tensioning element (60) is in the fixing position.

2. Fastening device of claim 1, **characterized in that** the outer diameter of the cam circle is larger than the diameter of the inner circle of the tensioning channel (85) formed by the clamping faces (70₁, 70₂, 70₃).

3. Fastening device of claim 1 or 2, **characterized in that** the cross-sectional shape of the tensioning element (60) is similar to and smaller than the cross-sectional shape of the tensioning channel (85), so that a gap is formed between the tensioning element (60) and the tensioning channel (85).

4. Fastening device of one of claims 1-3, **characterized in that** the mounting member (20) has two undercuts (40) and the frame member (30) has two associated engagement parts (50).

5. Fastening device of one of claims 1-4, **characterized in that** the frame member (30) comprises two arms (140, 141) spreadable relative to each other, each having a clamping face (70₂, 70₃) and an engagement part (53).

6. Fastening device of one of claims 1-5, **characterized in that** the frame member (30) is provided with at least one cam holder element (94) for holding the tensioning element (60) in its mounting position.

7. Fastening device of one of claims 1-6, **characterized in that** the cross-sectional shape of the tensioning channel (85) and of the tensioning element (60) approximates an equilateral triangle, the three corners of the tensioning element (60) forming the cams (90).

8. Fastening device of claim 7, **characterized in that** the tensioning element (60) has convex sides and the tensioning channel (85) has corresponding concave clamping faces (70₁-70₃).

9. Fastening device of one of claims 1-8, **characterized in that** the cams (90) are formed as circumferentially extending cam ribs (91) that cut into the respective clamping faces (70₁-70₃), when in the fixing position.

10. Fastening device of one of claims 1-9, **characterized in that** the tensioning element (60) has a head (100) with a structure (104) for applying a turning tool.

11. Fastening device of one of claims 1-10, **characterized in that** the tensioning element (60) comprises a swivel lever (116) for rotating the tensioning element (60) without a tool.

12. Fastening device of one of claims 1-11, **characterized in that** the tensioning element (60) comprises a head (100) with a stop (106) for limiting the rotational angle of the tensioning element (60).

## Revendications

1. Dispositif de fixation avec une partie de cadre (30) et une partie de montage (20) montée à ladite partie de cadre (30), dans lequel
la partie de montage (20) comprend une contre-dépouille (40),
ladite partie de cadre (30) comprend une partie d'engagement s'engageant dans la contre-dépouille (40), et
un élément de serrage (60) est prévu pour serrer ladite partie de cadre (30) avec ladite partie de montage (20),
**caractérisé en ce**
**que** ladite partie de montage (20) et ladite partie de cadre (30) présentent, ensemble, trois faces de serrage (70₁, 70₂, 70₃) vis-à-vis, formant une lumière de serrage (85), de manière à ce que deux desdites faces de serrages soient prévues sur ladites partie de cadre et l'autre soit prévu sur ladite partie de montage, et
**que** l'élément de serrage (60), qui est rotatable dans la lumière de serrage (85) entre une position de montage et une position de fixation, comprend trois cames (90), qui, dans la position de fixation dudit élément de serrage (60), sont serrées entre les trois faces de serrage (70₁, 70₂, 70₃) associées.

2. Dispositif de fixation selon la revendication 1, **caractérisé en ce que** le diamètre extérieur du cercle de cames est plus grand que le diamètre du cercle intérieur de la lumière de serrage (85) formé par les faces de serrage (70₁, 70₂, 70₃).

3. Dispositif de fixation selon la revendication 1 ou 2, **caractérisé en ce que** la forme en coupe transversale de l'élément de serrage (60) est semblable et inférieure à la forme en coupe transversale de la lumière de serrage (85), de manière à ce que une fente soit formée entre l'élément de serrage en position de montage et ladite lumière de serrage (85).

4. Dispositif de fixation selon l'une quelconque des revendications 1-3, **caractérisé en ce que** la partie de montage (20) comprend deux contre-dépouilles (40) et la partie de cadre (30) comprend deux parties d'engagement (50) associées.

5. Dispositif de fixation selon l'une quelconque des revendications 1-4, **caractérisé en ce que** ladite partie de cadre (30) comprend deux bras (140, 141) déployables l'un vers l'autre, chaque bras comprenant une face de serrage (70₂, 70₃) et une partie d'engagement (53).

6. Dispositif de fixation selon l'une quelconque des revendications 1-5, **caractérisé en ce que** la partie de cadre (30) est prévue d'au moins un élément de retenue à came (94) pour retenir l'élément de serrage (60) dans la position de montage.

7. Dispositif de fixation selon l'une quelconque des revendications 1-6, **caractérisé en ce que** la lumière de serrage (85) et l'élément de serrage (60) ont une forme en coupe transversale approximative d'un triangle équilatéral, les trois coins de l'élément de serrage (60) formant les cames (90).

8. Dispositif de fixation selon la revendication 7, **caractérisé en ce que** l'élément de serrage (60) comprend des côtés convexes et la lumière de serrage (85) comprend des faces de serrage (70₁-70₃) concaves correspondantes.

9. Dispositif de fixation selon l'une quelconque des revendications 1-8, **caractérisé en ce que** les cames (90) sont en forme de nervures à came (91) s'étendant selon la direction périphérique et coupant, en position de fixation, dans les faces de serrage (70₁-70₃) respectives.

10. Dispositif de fixation selon l'une quelconque des revendications 1-9, **caractérisé en ce que** l'élément de serrage (60) présent une tête (100) ayant une structure (104) pour y appliquer un outil de rotation.

11. Dispositif de fixation selon l'une quelconque des revendications 1-10, **caractérisé en ce que** l'élément de serrage (60) comprend un levier de rotation (116) pour tourner ledit élément de serrage (60) sans outil.

12. Dispositif de fixation selon l'une quelconque des revendications 1-11, **caractérisé en ce que** l'élément de serrage (60) comprend une tête (100) comprenant une butée (106) pour limiter l'angle de rotation dudit élément de serrage (60).
